# EUROPÄISCHE PATENTSCHRIFT

(11) **EP 1 108 301 B1**
(45) Veröffentlichungstag und Bekanntmachung des Hinweises auf die Patenterteilung: **20.10.2004**
(21) Anmeldenummer: 99968274.3
(22) Anmeldetag: 26.08.1999
(51) Int. Cl.: H04J 3/06

(54) **TELEKOMMUNIKATIONSSYSTEM SOWIE VERFAHREN ZUM SYNCHRONISIEREN DESSELBEN UND ZUM SENDEN VON DATEN**
TELECOMMUNICATIONS SYSTEM, AND METHODS FOR SYNCHRONIZING THE SAME AND FOR TRANSMITTING DATA
SYSTEME DE TELECOMMUNICATION, ET PROCEDES POUR SYNCHRONISER LEDIT SYSTEME ET POUR TRANSMETTRE DES DONNEES

(30) Priorität: 28.08.1998 EP 98116319
(43) Veröffentlichungstag der Anmeldung: 20.06.2001
(73) Patentinhaber: SIEMENS AKTIENGESELLSCHAFT, 80333 München (DE)
(72) Erfinder: HENNEN, Stefan, D-82131 Gauting (DE); RODER, Annette, D-81377 München (DE); SKORKA, Klemens, D-80807 München (DE); STEINIGKE, Klaus, D-81369 München (DE)
(86) Internationale Anmeldenummer: PCT/EP1999/006286
(87) Internationale Veröffentlichungsnummer: WO 2000/013354

(56) Entgegenhaltungen:
- EP-A- 0 522 748
- KLETT TH: "NETWORK SYNCHRONIZATION ASPECTS" ALCATEL TELECOMMUNICATIONS REVIEW, 1. Januar 1997 (1997-01-01), Seiten 31-37, XP000685831

## Beschreibung

Die Erfindung bezieht sich auf ein Telekommunikationssystem gemäß dem Oberbegriff des Patentanspruchs 1, auf ein Verfahren zum Synchronisieren eines Telekommunikationssystems sowie auf ein Verfahren zum Senden von Daten von einem Telekommunikationssystem in wenigstens ein Übertragungsnetz. Insbesondere bezieht sich die Erfindung auf Telekommunikationssysteme, die zur Übertragung von Daten über eine Vielzahl verschiedener Übertragungsnetze dienen.

Der Begriff Telekommunikation ist eine Sammelbezeichnung für alle nachrichtentechnischen Übertragungsverfahren durch vielfältige Dienste bei der Kommunikation über größere Entfernungen zwischen Mensch-Mensch, Mensch-Maschine und Maschine-Maschine. Durch das Zusammenwachsen von Informations- und Kommunikationstechnik erhält die Telekommunikation eine ganz besondere Bedeutung. Die Telekommunikation ist durch die Übertragungstechnik mit Kabelübertragungstechnik, Sprech- und Datenfunk, Satellitentechnik, Lichtwellenleitertechnik, Modems, digitale Vermittlungsanlagen und Vermittlungstechnik und lokale Netze gekennzeichnet.

Um einen sinnvollen Nachrichtenaustausch zwischen zwei (oder mehreren) Partnern zu ermöglichen, ist neben der reinen Übertragung von Nachrichten ein Regelwerk erforderlich, das die für eine sinnvolle Kommunikation einzuhaltenen Konventionen in Form von Protokollen festlegt. Derartige Regeln werden z.B. in den Dienstspezifikationen der einzelnen Ebenen des OSI-Referenzmodells (Open Systems Interconnection) beschrieben. Das OSI-Referenzmodell wurde im Jahre 1983 von der Internationalen Standardisierungsorganisation (ISO) ausgehend von der Übertragung von Informationen im Bereich der Datenverarbeitung erstellt und hat inzwischen eine sehr weite Verbreitung auch in den Anwendungen der Kommunikationssysteme gefunden. Das OSI-Modell stellt lediglich Prinzipien der Nachrichtenübertragung dar und definiert folglich nur die Logik des Informationsflusses zwischen Teilnehmern. Da der OSI-Standard keine Festlegungen über die physikalische Übertragung von Kommunikation beinhaltet, ist er herstellerunabhängig, bedarf jedoch zur Realisierung eines Kommunikationssystems ergänzende Protokolle zur detaillierteren Festlegung basierend auf weiteren, z.B. proprietären Standards.

Prinzipiell kann die asynchrone von der synchronen Kommunikation unterschieden werden. Unter asynchroner Kommunikation wird im allgemeinen der zeitlich völlig entkoppelte Austausch von Nachrichten zwischen einer Sende- und einer Empfangsinstanz verstanden. Es ist nicht vorhersehbar, wann eine Sende-, und die zugehörige Empfangsoperation angestoßen wird.

Demgegenüber wird unter synchroner Kommunikation der Austausch von Nachrichten zwischen einer Sende- und einer Empfangsinstanz verstanden, falls dieser Austausch in einem festen Zeitraster geschieht. Dabei müssen eine Sende- und die zugehörige Empfangsoperation immer zeitgleich ausgeführt werden.

Telekommunikationsnetzwerke sind durch die Möglichkeit des bi- und multidirektionalen Datenaustausches zwischen den Teilnehmern gekennzeichnet. Dies setzt voraus, daß jeder beteiligte Teilnehmer mit jeder anderen über dasselbe Medium kommunizieren kann. Die einfachste Realisierung hierzu ist, die Kommunikation aller Teilnehmer im Basisband. Aufgrund der Vielzahl paralleler aktiver Teilnehmer kommen hier vornehmlich Verfahren zum Einsatz, die den Teilnehmern die verfügbare Bandbreite im Zeitmultiplex statisch zuordnen. Aufgrund der steigenden Nutzung der Lichtwellenleiter-Technik, der Notwendigkeit einer verbesserten interkontinentalen Datenkommunikation und den gestiegenen Leistungsanforderungen, wird die seit den 60er Jahren vorherrschende Plesiochrone Digitale Hierarchie (PDH) zunehmend durch die Synchrone Digitale Hierarchie (SDH) abgelöst.

Die Plesiochrone Digitale Hierarchie multiplext die in PCM-Form (Pulscodemodulation) vorliegenden Daten verschiedener Endsysteme bitweise in einen Datenstrom. Eine Hierarchiestufe ist dabei durch die Anzahl der von ihr gemultiplexten Basiskanäle bzw. der Rahmen der darunterliegenden Hierarchiestufe gekennzeichnet.

Aufgrund der unterschiedlichen Übertragungsrate eines Basiskanals in Europa und den USA kam es zur Ausbildung inkompatibler PDH-Hierarchien. Der in den USA vorherrschende DS1-Standard sieht drei Hierarchiestufen vor, während im europäischen E1-Standard fünf Stufen vorgesehen sind. Die unterste Stufe (E1) multiplext dabei 30 Basiskanäle. Bedingt durch die plesiochrone Übertragung, bei der Abweichungen von (2 - 5)10⁻² Hz vom nominellen Takt zulässig sind, entsprechen die nominellen Übertragungsraten nicht exakt dem Vielfachen der jeweils niedrigeren Stufe, sondern sind geringfügig höher angesiedelt. Die damit aufgrund der zulässigen Schwankungen auftretende Lücke innerhalb einer Hierarchiestufe wird durch Stopfbits, die keine Information enthalten, gefüllt (Positives Stopfen).

Obwohl auch für die höheren PDH-Stufen Lichtwellenleiter als Übertragungsmedium eingesetzt werden, führte bereits in den 80er Jahren der verstärkte Einsatz von Lichtwellenleitern zu Überlegungen hinsichtlich eines neuen, leistungsfähigeren Ansatzes, der die veraltete PDH-Technik ablösen sollte.

Von der Firma Bellcore wurde die Entwicklung in den USA initiiert und 1984 durch das Industrial Carriers Compatibility Forum (ICCF) übernommen. Aus dem hieraus hervorgehenden amerikanischen Standard SONET (Synchronous Optical Network) resultierte der von der International Telecommunications Union (ITU) verabschiedete internationale Standard SDH (Synchronous Digital Hierarchie).

SONET ist der von der CCITT verabschiedete Standard einer Schnittstellen-Familie für den Einsatz in optischen Netzen, d.h. in Netzen, deren Übertragungsmedium eine Glasfaser ist. Damit ermöglicht SONET erstmals die Verbindung von Terminals verschiedener Hersteller in standardisierter Form sowie die direkte Verbindung von optischen Multiplexern mit digitalen Kreuzschienenverteilern. Dabei werden Datenraten von 51,84 Mbps bis über 2,4 Gbps hinaus erreicht.

Die Synchrone Digitale Hierarchie (SDH) wird gelegentlich auch als die internationale Variante von SONET bezeichnet. Das Basisformat der SDH-Übertragung ist der STM-1-Rahmen (Synchronous Transport Modul). Der STM-1-Rahmen setzt sich aus einem Header, der Sektionszusatzinformation, und einem Nutzdatenteil, dem Container, zusammen. Den STM-Rahmen auch aller höheren Hierarchiestufen gemeinsam ist eine feste Übertragungszeit. Da ab einer Übertragungsrate von 155 Mbps der SDH-Standard kompatibel zum SONET-Standard ist, ermöglicht SDH gegenüber PDH eine vereinfachte interkontinentale Datenkommunikation. Aufgrund des im Vergleich zur Nutzlast geringen Overheads zeichnet sich SDH ferner durch eine sehr gute Effizienz von über 96% aus.

Telekommunikationssysteme, die Verbindung zu standardisierten Übertragungsnetzen wie PDH, SDH oder SONET haben, erfordern in der Regel eine Synchronisation, um die notwendige Taktqualität an der Schnittstelle zum Übertragungsnetzwerk zu erreichen. Dabei werden zwei Betriebsarten der Synchronisation unterschieden. Im Falle einer externen Synchronisation wird dem System von einer externen Synchronisationsquelle ein Takt direkt zugeführt. Demgegenüber wird bei einer Synchronisation über die Übertragungsstrecke der Takt aus dem empfangenen Datenstrom der Schnittstelle gewonnen und dem System als Synchronisationsquelle zugeführt. Dazu enthalten die empfangenen Datenrahmen neben der Nutzinformation unter anderem auch Zusatzinformationen, die die Qualität des Taktsignales einer Gegenstelle beschreiben.

Bei einem Teil der Schnittstellentypen in plesiochroner digitaler Hierarchie wird die Taktqualität im Timing-Marker-Bit übertragen. Tabelle 1 zeigt das Timing-Marker-Bit MA-Byte gemäß PDH (ITU G.832, E3).

Im Falle von SONET und der Synchronen Digitalen Hierarchie SDH wird die Qualität des Taktsignales im sogenannten SSM-Byte (Synchronisation Status Message) kommuniziert. In Tabelle 2 sind die SSM-Definition in SONET (Bellcore GR253) und in Tabelle 3 die SSM-Definition bei Synchroner Digitaler Hierarchie (ITU G.708) dargestellt.

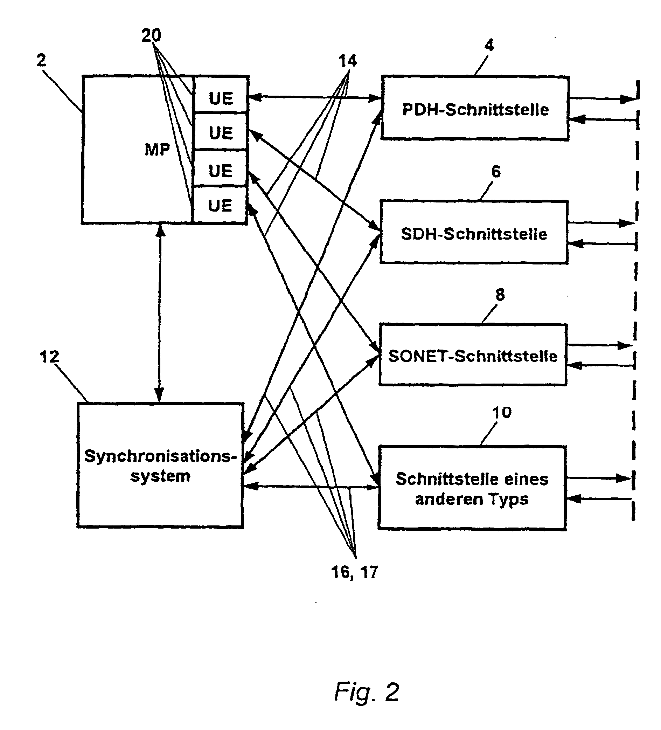

Aufgrund der parallelen Existenz verschieden standardisierter Übertragungsnetze wie PDH, SDH oder SONET besteht ein Bedarf an Telekommunikationssystemen, welche gleichzeitig Verbindungen zu mehreren dieser Übertragungsnetze unterhalten. Fig. 2 zeigt ein solches Telekommunikationssystem, das einen Hauptprozessor MP 2 und Schnittstellenkarten 4-10 umfaßt. Dabei besitzt ein solches Telekommunikationssystem für jeden unterschiedlichen Schnittstellentyp eine eigene Schnittstellenkarte. Das Telekommunikationssystem umfaßt ferner ein Synchronisationssystem 12, das sowohl mit dem Hauptprozessor 2 als auch den Schnittstellenkarten verbunden ist.

Wie in Fig. 2 mit Bezugszeichen 14 gezeigt, kommunizieren die Schnittstellenkarten 4-10 mit dem Hauptprozessor 2 die jeweiligen Taktqualitäten. Darüber hinaus liefern die Schnittstellenkarten, wie unter Bezugszeichen 16 gezeigt, den jeweils aus dem Übertragungsnetz gewonnen Takt an das Synchronisationssystem 12. Das Synchronisationssystem synchronisiert das Telekommunikationssystem unter Steuerung durch Hauptprozessor 2 über Verbindungen 17 mit einem der von den Schnittstellenkarten übermitteltem Takt 16.

Der Hauptprozessor 2 beurteilt auf der Grundlage der über die Verbindungen 14 von den Schnittstellenkarten 4-10 empfangenen Taktqualitäten, mit welchem der aus den standardisierten Übertragungsnetzen zugeführten Taktsignalen des Telekommunikationssystems synchronisiert werden soll. Da, wie oben ausgeführt und aus den Tabellen 1 bis 3 ersichtlich, die von den unterschiedlichen Schnittstellentypen bereitgestellten Taktqualitätsinformationen in verschiedenen Formaten vorliegen und sogar verschiedene Wertebereiche aufweisen, muß die Behandlung der Taktqualitäten unterschiedlicher Schnittstellentypen im Hauptprozessor 2 getrennt erfolgen. Zu diesem Zweck verfügt der Hauptprozessor über Untereinheiten 20, von denen jede zur Bearbeitung der Taktqualitätsinformationen eines Schnittstellentyps (PDH, SDH, SONET) vorgesehen ist. Diese verschiedenen Untereinheiten 20 des Hauptprozessors 2 besitzen jeweils einen unterschiedlichen Aufbau und weisen, bedingt durch die unterschiedlichen Datenformate, eine jeweils verschiedene Funktionalität auf. Folglich werden im Hauptprozessor die Taktqualitäten getrennt behandelt. Eine unterschiedliche Behandlung geht auch aus dem aktuellen Entwurf der ITU-T, G.synce,01/98 (Synchronisation Layer Functions) hervor. Dieser Entwurf unterscheidet die Optionen 1 bis 3, wobei die Optionen 1 und 3 die Synchrone Digitale Hierarchie nach bisherigem ITU-Standard beschreiben, während die Option 2 sich auf das auf Bellcore basierende SONET bezieht.

Telekommunikationssysteme der vorgenannten Bauart weisen den Nachteil auf, daß im Hauptprozessor mehrere Algorithmen für die den verschiedenen Übertragungsnetzen inhärenten Wertebereiche und Formate notwendig sind. Aufgrund der verschiedenen existierenden Normen, die auch in verschiedenen Ländern unterschiedlich sein können, ist daher stets eine Anpassung des Hauptprozessors notwendig.

Der Erfindung liegt somit die Aufgabe zugrunde, ein Telekommunikationssystem der obengenannten Art sowie ein Verfahren zum Synchronisieren eines solchen Telekommunikationssystems und zum Senden von Daten von einem solchen Telekommunikationssystem anzugeben, bei denen die Kommunikation von Taktqualitäten vereinfacht ist.

Diese Aufgabe wird durch die Gegenstände der Patentansprüche 1, 10 und 20 gelöst.

Vorteilhafte Ausgestaltungen der Erfindung sind Gegenstände der Patentansprüche 2 bis 9, 11 bis 19 und 21 bis 27.

Mit der Erfindung wird insbesondere erreicht, daß die systeminterne Verarbeitung der Taktqualität nach lediglich einem Algorithmus erfolgt. Dabei ist eine Unterscheidung des Schnittstellentyps nicht mehr erforderlich.

Durch die Vermeidung getrennter Behandlungen von Taktqualitäten aus verschiedenen Übertragungsnetzen ergibt sich eine Vereinfachung der systeminternen Kommunikation besonders beim Senden, da der Hauptprozessor 2 eines erfindungsgemäßen Telekommunikationssystems lediglich einen Wert der Taktqualität erzeugt und an alle verbundenen Schnittstellenkarten weiterleitet. Somit entfällt das Erzeugen unterschiedlicher Datenformate im Hauptprozessor. Damit verbunden ist eine Reduktion des Hardware- und Softwareaufwandes im Hauptprozessor.

Weiterhin wird vorteilhafterweise die Anzahl der zu sendenden Meldungen reduziert und die Performance des Systems gesteigert.

Ein weiterer Vorteil ergibt sich aus der vereinfachten Nachrüstbarkeit des Telekommunikationssystems bei der Einführung eines neuen Übertragungsnetzstandards, da der Hauptprozessor keine standardabhängigen Elemente enthält.

Weiter wird mit der Erfindung in vorteilhafter Weise ein Telekommunikationssystem geschaffen, das bei der Umwandlung von Daten in ein Format, das unabhängig von den Formaten der Übertragungsnetze ist, einen Wertebereich des unabhängigen Formats wählt, der alle spezifischen Formate abdeckt. Auf diese Weise wird ein Verlust von Informationen bezüglich der Taktqualität einzelner Übertragungsnetze vermieden.

Bevorzugte Ausführungsbeispiele der Erfindung werden nachstehend erläutert. Es zeigen:
- Fig. 1: ein bevorzugtes Ausführungsbeispiel eines erfindungsgemäßen Telekommunikationssystems, und
- Fig. 2: ein herkömmliches Telekommunikationssystem.

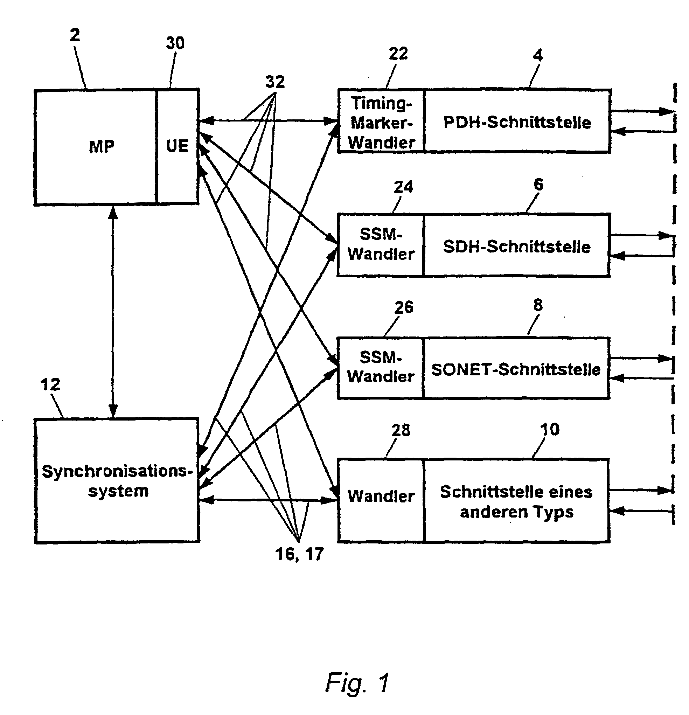

In Fig. 1 ist ein bevorzugtes Ausführungsbeispiel eines Telekommunikationssystems dargestellt, das, wie das oben beschriebene bekannte Telekommunikationssystem, einen Hauptprozessor 2, mehrere Schnittstellenkarten 4-10 und ein Synchronisationssystem 12 umfaßt. Zudem weisen die Schnittstellenkarten 4-10 Wandler 22-28 auf, die die schnittstellenspezifischen Taktqualitäten in ein einheitliches Format umwandeln. Beispielsweise wandelt der Timing-Marker-Wandler 22 die im Timing-Marker-Bit enthaltene Information über die Taktqualität des PDH-Übertragungsnetzes in das einheitliche Format um. Die SSM-Wandler 24, 26 der SDH-Schnittstellenkarte 6 und der SONET-Schnittstellenkarte 8 wandeln die in den SSM-Daten enthaltenen Qualitätsinformationen, wie sie in den Tabellen 2 und 3 dargestellt sind, in das einheitliche Format um. Diese einheitlich formatierten Taktqualitäten werden, wie im Bezugszeichen 32 gezeigt, an den Hauptprozessor 2 übermittelt. Der Hauptprozessor 2 verfügt über eine gemeinsame Untereinheit 30, die die einheitlich formatierten Taktqualitäten sämtlicher Schnittstellenkarten empfängt, unter Verwendung eines einzigen gemeinsamen Algorithmus verarbeitet und an den Hauptprozessor zur Verarbeitung weiterleitet.

Beim Senden von Daten von dem Telekommunikationssystem zu einem oder mehreren Übertragungsnetzen übermittelt die gemeinsame Untereinheit 30 des Hauptprozessors 2 über die Verbindungen 32 die aktuelle Taktqualität im einheitlichen Datenformat an die Wandler 22-28 der Schnittstellenkarten 4-10. Die Wandler wandeln die empfangene Taktqualität in das entsprechende, in Tabellen 1 bis 3 dargestellte Datenformat des jeweiligen Übertragungsnetzes um, so daß die zu sendenden Daten von der jeweiligen Schnittstellenkarte 4-10 an die Gegenstelle gesendet werden kann.

Gemäß einer bevorzugten Ausführung der Erfindung verfügt das einheitliche Format der Taktqualitäten über einen Wertebereich, der wenigstens die Ausdehnung des größten Wertebereiches der verbundenen Übertragungsnetze aufweist. Vorzugsweise wird die Taktqualität in vier Bits eines Bytes abgelegt.

Vorzugsweise umfaßt erfindungsgemäß die Entscheidung, ob das Telekommunikationssystem mit einem zugeführten Takt synchronisiert werden soll, das Auswählen des zugeführten Taktes der höchsten Qualität. Alternativ wird ein zugeführter Takt ausgewählt, dessen Qualität oberhalb eines Schwellwertes liegt.

**Tabelle 1**

| Beschreibung | Timing-Marker-Bit (MA-Byte) |
|---|---|
| Primärer Referenztakt | 0 |
| Unbekannt | 1 |

**Tabelle 2**

| Beschreibung | SSM-Z1-Byte Bits 8-5 | DS1-ESF-Datenverbindungscodewort |
|---|---|---|
| Primärer Referenztakt | 1000 | 00000100 11111111 |
| Normal, unbekannte Qualität | 0000 | 00001000 11111111 |
| Stratum 2 holdover | 1110 | 00001100 11111111 |
| Stratum 3 holdover | 0101 | 00010000 11111111 |
| SONET selftimed | 0011 | 00100010 11111111 |
| Stratum 4 freerun | N/A | 00101000 11111111 |
| Zur Synchronisation ungeeignet | 1111 | 00110000 11111111 |

**Tabelle 3**

| Beschreibung | SSM-S1-Byte, Bits 5-8 |
|---|---|
| G.811 | 0010 |
| Synchronisationsnetzwerk existiert, unbekannte Qualität | 0000 |
| G.812 Transit-Knoten | 0100 |
| G.812 Lokaler Knoten | 1000 |
| SDH SETS | 1011 |
| Für Synchronisation nicht geeignet | 1111 |

## Patentansprüche

1. Telekommunikationssystem zur Übertragung von Daten über wenigstens eines einer Vielzahl verschiedener Übertragungsnetze, wobei dem Telekommunikationssystem aus dem wenigstens einen Übertragungsnetz wenigstens ein Takt als Synchronisationsquelle zugeführt wird, bestehend aus:
wenigstens einer Schnittstelleneinheit (4-10) zum Empfangen
von Daten von dem wenigstens einen Übertragungsnetz, die die Qualität des über das wenigstens eine Übertragungsnetz zugeführten Taktes beschreiben, und
einer Einrichtung (2, 30) zur Beurteilung der Qualität des wenigstens einen zugeführten Taktes,
**dadurch gekennzeichnet, daß**
die wenigstens eine Schnittstelleneinheit (4-10) einen Wandler (22-28) umfaßt, der die die Qualität beschreibenden Daten in Nachrichten umwandelt, deren Format von denen der übertragenen Daten unabhängig ist, und diese Nachrichten an die Einrichtung (2, 30) zur Beurteilung sendet.

2. Telekommunikationssystem nach Anspruch 1,
**dadurch gekennzeichnet,**
**daß** der Wandler (22-28) so eingerichtet ist, daß er Nachrichten von der Einrichtung (2, 30) zur Beurteilung empfängt und diese in Daten des Formats des wenigstens einen Übertragungsnetzes umwandelt.

3. Telekommunikationssystem nach Anspruch 1 oder 2,
**dadurch gekennzeichnet,**
**daß** die Daten Nutzdaten und Zusatzdaten enthalten, wobei die Qualität des Taktes durch die Zusatzdaten beschrieben wird.

4. Telekommunikationssystem nach einem der Ansprüche 1 bis 3,
**dadurch gekennzeichnet,**
**daß** die Vielzahl verschiedener Übertragungsnetze wenigstens ein PDH-Übertragungsnetz umfaßt.

5. Telekommunikationssystem nach einem der Ansprüche 1 bis 4,
**dadurch gekennzeichnet,**
**daß** die Vielzahl verschiedener Übertragungsnetze wenigstens ein SDH-Übertragungsnetz umfaßt.

6. Telekoaununikationssystem nach einem der Ansprüche 1 bis 5,
**dadurch gekennzeichnet,**
**daß** die Vielzahl verschiedener Übertragungsnetze wenigstens ein SONET-Übertragungsnetz umfaßt.

7. Telekommunikationssystem nach einem der Ansprüche 1 bis 6,
**dadurch gekennzeichnet,**
**daß** die Nachrichten zur Beschreibung der Qualität Zahlenwerte in einem Wertebereich enthalten.

8. Telekommunikationssystem nach Anspruch 7,
**dadurch gekennzeichnet,**
**daß** der Wertebereich wenigstens den Umfang des größten Wertebereiches der übertragenen Daten aufweist.

9. Telekommunikationssystem nach Anspruch 7,
**dadurch gekennzeichnet,**
**daß** der Wertebereich 4 Bits eines Bytes umfaßt.

10. Verfahren zum Betreiben eines Telekommunikationssystems, das mit wenigstens einem einer Vielzahl verschiedener Übertragungsnetze verbunden ist, wobei dem Telekommunikationssystem aus dem wenigstens einen Übertragungsnetz wenigstens ein Takt als Synchronisationsquelle zugeführt wird, wobei das Verfahren die Schritte aufweist:
Empfangen von Daten, die die Qualität des zugeführten Taktes beschreiben, aus dem wenigstens einen Übertragungsnetz in einem in dem wenigstens einen Übertragungsnetz verwendeten Format,
Umwandeln der Daten in Nachrichten eines Formates, das vom Format der empfangenen Daten unabhängig ist,
Beurteilen der Qualität des zugeführten Taktes durch Auswerten der Nachrichten,
Entscheiden, ob das Telekommunikationssystem mit dem zugeführten Takt synchronisiert werden soll, und
Synchronisieren des Telekommunikationssystems mit dem zugeführten Takt, falls das Telekommunikationssystem mit dem zugeführten Takt synchronisiert werden soll.

11. Verfahren nach Anspruch 10, wobei der Schritt des Empfangens von Daten die Schritte des Empfangens von Nutzdaten und des Empfangens von Zusatzdaten umfaßt, wobei die die Qualität des Taktes beschreibenden Daten Zusatzdaten sind.

12. Verfahren nach Anspruch 10 oder 11, wobei die Daten Daten eines PDH-Übertragungsnetzes sind.

13. Verfahren nach einem der Ansprüche 10 bis 12, wobei die Daten Daten eines SDH-Übertragungsnetzes sind.

14. Verfahren nach einem der Ansprüche 10 bis 13, wobei die Daten Daten eines SONET-Übertragungsnetzes sind.

15. Verfahren nach einem der Ansprüche 10 bis 14, wobei der Schritt des Umwandelns der Daten in Nachrichten einen Schritt des Umrechnens des Wertes der Qualität des zugeführten Taktes in einen Wert eines unabhängigen Wertebereiches umfaßt.

16. Verfahren nach Anspruch 15, wobei der Schritt des Umrechnens ohne Verlust umkehrbar ist.

17. Verfahren nach Anspruch 15, wobei der Schritt des Umrechnens das Setzen von vier Bits eines Bytes umfaßt.

18. Verfahren nach einem der Ansprüche 10 bis 17, wobei der Schritt des Entscheidens das Auswählen des zugeführten Taktes der höchsten Qualität umfaßt.

19. Verfahren nach einem der Ansprüche 10 bis 17, wobei der Schritt des Entscheidens das Auswählen eines zugeführten Taktes umfaßt, dessen Qualität oberhalb eines Schwellwertes liegt.

20. Verfahren zum Senden von Daten von einem Telekommunikationssystem in wenigstens eines einer Vielzahl verschiedener Übertragungsnetze, wobei die Daten die Qualität eines Taktes beschreiben, zu dem das Telekommunikationssystem synchronisiert ist, wobei das Verfahren die folgenden Schritte aufweist:
Erzeugen einer die Qualität beschreibenden Nachricht in einem Format, das von Formaten der zu sendenden Daten unabhängig ist,
Umwandeln der Nachricht in Daten eines in dem wenigstens einen Übertragungsnetz verwendeten Formates, und
Übertragen der Daten in das wenigstens eine Übertragungsnetz.

21. Verfahren nach Anspruch 20, wobei die Daten Nutzdaten und Zusatzdaten umfassen und wobei die die Qualität des Taktes beschreibenden Daten Zusatzdaten sind.

22. Verfahren nach Anspruch 20 bis 21, wobei die Daten Daten eines PDH-Übertragungsnetzes sind.

23. Verfahren nach Anspruch 20 bis 22, wobei die Daten Daten eines SDH-Übertragungsnetzes sind.

24. Verfahren nach Anspruch 20 bis 23, wobei die Daten Daten eines SONET-Übertragungsnetzes sind.

25. Verfahren nach einem der Ansprüche 20 bis 24, wobei der Schritt des Umwandelns der Nachrichten in Daten einen Schritt des Umrechnens des Wertes der Qualität des zugeführten Taktes in einen Wert eines unabhängigen Wertebereiches umfaßt.

26. Verfahren nach Anspruch 25, wobei der Schritt des Umrechnens ohne Verlust umkehrbar ist.

27. Verfahren nach Anspruch 25 oder 26, wobei der Schritt des Umrechnens das Setzen von vier Bits eines Bytes umfaßt.

## Claims

1. Telecommunication system for transmitting data via at least one of a multiplicity of different transmission networks, the telecommunication system being supplied with at least one clock as synchronization source from the at least one transmission network, consisting of:
at least one interface unit (4-10) for receiving data from the at least one transmission network, which describe the quality of the clock signal supplied via the at least one transmission network, and
a device (2, 30) for assessing the quality of the at least one clock signal supplied,
**characterized in that** the at least one interface unit (4-10) comprises a converter (22, 28) which converts the data describing the quality into messages the format of which is independent of those of the data transmitted, and transmits these messages to the device (2, 30) for assessment.

2. Telecommunication system according to Claim 1, **characterized in that** the converter (22, 28) is set up in such a manner that it receives messages from the device (2, 30) for assessment and converts them into data of the format of the at least one transmission network.

3. Telecommunication system according to Claim 1 or 2, **characterized in that** the data contain user data and supplementary data, the quality of the clock signal being described by the supplementary data.

4. Telecommunication system according to one of Claims 1 to 3, **characterized in that** the multiplicity of different transmission networks comprises at least one PDH transmission network.

5. Telecommunication system according to one of Claims 1 to 4, **characterized in that** the multiplicity of different transmission networks comprises at least one SDH transmission network.

6. Telecommunication system according to one of Claims 1 to 5, **characterized in that** the multiplicity of different transmission networks comprises at least one SONET transmission network.

7. Telecommunication system according to one of Claims 1 to 6, **characterized in that** the messages for describing the quality contain numerical values within a value range.

8. Telecommunication system according to Claim 7, **characterized in that** the value range has at least the extent of the largest value range of the data transmitted.

9. Telecommunication system according to Claim 7, **characterized in that** the value range comprises four bits of a byte.

10. Method for synchronizing a telecommunication system which is connected to at least one of a multiplicity of different transmission networks, the telecommunication system being supplied with at least one clock signal from the at least one transmission network as synchronization source, the method having the following steps:
receiving data which describe the quality of the clock signal supplied, from the at least one transmission network in a format used in the at least one transmission network,
converting the data into messages of a format which is independent of the format of the received data, assessing the quality of the clock signal supplied by assessing the messages,
deciding whether the telecommunication system is to be synchronized with the clock signal supplied, and
synchronizing the telecommunication system with the clock signal supplied if the telecommunication system is to be synchronized with the clock signal supplied.

11. Method according to Claim 11, the step of receiving data comprising the steps of receiving user data and of receiving supplementary data, the data describing the quality of the clock signal being supplementary data.

12. Method according to Claim 10 or 11, the data being data of a PDH transmission network.

13. Method according to one of Claims 10 to 12, the data being data of an SDH transmission network.

14. Method according to one of Claims 10 to 13, the data being data of a SONET transmission network.

15. Method according to one of Claims 10 to 14, the step of converting the data into messages comprising a step of recalculating the value of the quality of the clock signal supplied into a value of an independent value range.

16. Method according to Claim 15, the step of recalculation being reversible without loss.

17. Method according to Claim 15, the step of recalculating comprising the setting of four bits of one byte.

18. Method according to one of Claims 10 to 17, the step of deciding comprising the selection of the highest-quality clock signal supplied.

19. Method according to one of Claims 10 to 17, the step of deciding comprising the selection of a clock signal supplied, the quality of which is above a threshold value.

20. Method for transmitting data from a telecommunication system into at least one of a multiplicity of different transmission networks, the data describing the quality of a clock signal with which the telecommunication system is synchronized, the method exhibiting the following steps:
generating a message describing the quality, in a format which is independent of formats of the data to be transmitted,
converting the message into data of a format used in the at least one transmission network, and transmitting the date into the at least one transmission network.

21. Method according to Claim 20, the step of receiving data comprising the steps of receiving user data and of receiving supplementary data, the data describing the quality of the clock signal being supplementary data.

22. Method according to Claim 20 to 21, the data being data of a PDH transmission network.

23. Method according to Claim 20 to 22, the data being data of an SDH transmission network.

24. Method according to Claim 20 to 23, the data being data of a SONET transmission network.

25. Method according to one of Claims 20 to 24, the step of converting the data into messages comprising a step of recalculating the value of the quality of the clock signal supplied into a value of an independent valve range.

26. Method according to Claim 25, the step of recalculating being reversible without loss.

27. Method according to Claim 25 or 26, the step of calculating comprising the setting of four bits of one byte.

## Revendications

1. Système de télécommunication pour la transmission de données par le biais d'au moins un réseau parmi une pluralité de réseaux de transmission différents, au moins une cadence venant de l'au moins un réseau de transmission étant fournie au système de télécommunication en tant que source de synchronisation, formé de :
au moins une unité d'interface (4-10) pour la réception des données de l'au moins un réseau de transmission qui décrivent la qualité de la cadence fournie par le biais de l'au moins un réseau de transmission, et
un dispositif (2, 30) pour le jugement de l'au moins une cadence fournie,
**caractérisé en ce que**
l'au moins une unité d'interface (4-10) comprend un convertisseur (22-28) qui convertit les données décrivant la qualité en messages dont le format est indépendant de ceux des données transmises et envoie ces messages au dispositif (2, 30) en vue de leur jugement.

2. Système de télécommunication selon la revendication 1,
**caractérisé en ce**
**que** le convertisseur (22-28) est réglé de manière à recevoir des messages du dispositif (2, 30) en vue de leur jugement et à les convertir en données du format de l'au moins un réseau de transmission.

3. Système de télécommunication selon la revendication 1 ou 2,
**caractérisé en ce**
**que** les données contiennent des données utiles et des données supplémentaires, la qualité de la cadence étant décrite par les données supplémentaires.

4. Système de télécommunication selon l'une des revendications 1 à 3,
**caractérisé en ce**
**que** la pluralité des différents réseaux de transmission comprend au moins un réseau de transmission PDH.

5. Système de télécommunication selon l'une des revendications 1 à 4,
**caractérisé en ce**
**que** la pluralité des différents réseaux de transmission comprend au moins un réseau de transmission SDH.

6. Système de télécommunication selon l'une des revendications 1 à 5,
**caractérisé en ce**
**que** la pluralité des différents réseaux de transmission comprend au moins un réseau de transmission SONET.

7. Système de télécommunication selon l'une des revendications 1 à 6,
**caractérisé en ce**
**que** les messages pour la description de la qualité contiennent des valeurs numériques comprises dans un domaine de valeurs.

8. Système de télécommunication selon la revendication 7,
**caractérisé en ce**
**que** le domaine de valeurs a au moins la grandeur du plus large domaine de valeurs des données transmises.

9. Système de télécommunication selon la revendication 7,
**caractérisé en ce**
**que** le domaine de valeurs comprend 4 bits d'un octet.

10. Procédé d'exploitation d'un système de télécommunication qui est relié à au moins un réseau parmi une pluralité de réseaux de transmission différents, au moins une cadence venant de l'au moins un réseau de transmission étant fournie au système de télécommunication en tant que source de synchronisation, le procédé comprenant les étapes qui consistent à :
recevoir des données qui décrivent la qualité de la cadence fournie, données qui viennent de l'au moins un réseau de transmission et sont dans un format utilisé dans l'au moins un réseau de transmission,
convertir les données en messages ayant un format indépendant du format des données reçues,
juger la qualité de la cadence fournie en analysant les messages,
décider si le système de télécommunication doit être synchronisé avec la cadence fournie et
synchroniser le système de télécommunication avec la cadence fournie dans le cas où le système de télécommunication doit être synchronisé avec ladite cadence.

11. Procédé selon la revendication 10, l'étape de réception des données comprenant les étapes de réception de données utiles et de réception de données supplémentaires, les données décrivant la qualité de la cadence étant des données supplémentaires.

12. Procédé selon la revendication 10 ou 11, les données étant des données d'un réseau de transmission PDH.

13. Procédé selon l'une des revendications 10 à 12, les données étant des données d'un réseau de transmission SDH.

14. Procédé selon l'une des revendications 10 à 13, les données étant des données d'un réseau de transmission SONET.

15. Procédé selon l'une des revendications 10 à 14, l'étape de conversion des données en messages comprenant une étape de conversion de la valeur de la qualité de la cadence fournie en une valeur d'un domaine de valeurs indépendant.

16. Procédé selon la revendication 15, l'étape de conversion étant réversible sans pertes.

17. Procédé selon la revendication 15, l'étape de conversion comprenant l'assemblage de quatre bits d'un octet.

18. Procédé selon l'une des revendications 10 à 17, l'étape de décision comprenant la sélection de la cadence fournie ayant la meilleure qualité.

19. Procédé selon l'une des revendications 10 à 17, l'étape de décision comprenant la sélection d'une cadence fournie dont la qualité est supérieure à une valeur seuil.

20. Procédé d'émission de données d'un système de télécommunication dans au moins un réseau parmi une pluralité de réseaux de transmission différents, les données décrivant la qualité d'une cadence à laquelle le système de télécommunication est synchronisé, le procédé comprenant les étapes suivantes :
production d'un message décrivant la qualité dans un format indépendant des formats des données à émettre,
conversion du message en données d'un format utilisé dans l'au moins un réseau de transmission et
transmission des données dans l'au moins un réseau de transmission.

21. Procédé selon la revendication 20, les données comprenant des données utiles et des données supplémentaires et les données décrivant la qualité de la cadence étant des données supplémentaires.

22. Procédé selon les revendications 20 à 21, les données étant des données d'un réseau de transmission PDH.

23. Procédé selon les revendications 20 à 22, les données étant des données d'un réseau de transmission SDH.

24. Procédé selon les revendications 20 à 23, les données étant des données d'un réseau de transmission SONET.

25. Procédé selon l'une des revendications 20 à 24, l'étape de conversion des messages en données comprenant une étape de conversion de la valeur de la qualité de la cadence fournie en une valeur d'un domaine de valeurs indépendant.

26. Procédé selon la revendication 25, l'étape de conversion étant réversible sans pertes.

27. Procédé selon la revendication 25 ou 26, l'étape de conversion comprenant l'assemblage de quatre bits d'un octet.
